# EUROPÄISCHE PATENTSCHRIFT

(11) **EP 1 267 603 B1**
(45) Veröffentlichungstag und Bekanntmachung des Hinweises auf die Patenterteilung: **28.07.2004**
(21) Anmeldenummer: 01931365.9
(22) Anmeldetag: 15.03.2001
(51) Int. Cl.: A01D 41/02, A01F 12/10

(54) **SELBSTFAHRENDER MÄHDRESCHER**
SELF-PROPELLED COMBINE
MOISSONNEUSE-BATTEUSE AUTOMOTRICE

(30) Priorität: 25.03.2000 DE 10015057; 25.03.2000 DE 10015058
(43) Veröffentlichungstag der Anmeldung: 02.01.2003
(73) Patentinhaber: Case Harvesting Systems GmbH, 01844 Neustadt (DE)
(72) Erfinder: VOSS, Lothar, 01844 Neustadt (DE); VON ALLWÖRDEN, Wilhelm, 01326 Dresden (DE)
(74) Vertreter: Müller, Lutz
(86) Internationale Anmeldenummer: PCT/DE2001/001004
(87) Internationale Veröffentlichungsnummer: WO 2001/072113

(56) Entgegenhaltungen:
- EP-A- 0 848 901
- WO-A-97/01951
- DD-A- 283 316
- FR-A- 1 377 517
- US-A- 3 714 948
- US-A- 4 150 525
- US-A- 4 367 757
- US-A- 4 606 356

## Beschreibung

Die Erfindung betrifft einen selbstfahrenden Mähdrescher hoher Leistungsfähigkeit zur Ernte landwirtschaftlicher Dreschgüter, insbesondere nach den Merkmalen im Oberbegriff des Patentanspruchs 1.

Die Leistungsfähigkeit eines Mähdreschers wird bekanntlich nicht nur durch die Leistungsfähigkeit der Drescheinrichtung bestimmt, sondern es kommt auch auf eine aufeinander abgestimmte Leistungsfähigkeit sämtlicher das Dreschgut fördernden und bearbeitenden Funktionsbaugruppen an.

Zur Verwirklichung dieser Zielstellung ist in der DE 196 06 989 A1 am Beispiel eines Axialmähdreschers vorgeschlagen worden, die Axial- Dresch- und Trenntrommeln unmittelbar hinter dem Schneidwerk und zwischen den Vorderrädern des Mähdreschers anzuordnen. Das von beiden Einrichtungen abgeschiedene Dreschgut wird über den Gutstrom aufteilende Fördereinrichtungen der Reinigungseinrichtung zugeführt, die hier aus zwei separat ausgebildeten und übereinander angeordneten Reinigungseinrichtungen besteht. Die Fördereinrichtungen beschicken jede Reinigungseinrichtung mit einer Teilmenge des Dreschgutes.

Nachteilig an diesem Axialmähdrescher ist, daß die Fördereinrichtungen nicht in der Lage sind, das Dreschgut zwischen der oberen und der unteren Reinigungseinrichtung und auch über deren Breite gesehen gleichbleibend gleichmäßig zu verteilen. Das führt zu einer beträchtlichen Leistungssenkung der Reinigungseinrichtungen und demzufolge zu einer Leistungssenkung des gesamten Mähdreschers. Dieser Nachteil wird durch die Fördereinrichtungen selbst und durch die Umlenkstellen des Dreschgutes vor und hinter ihnen noch weiter ausgeprägt. Außerdem ist ein so ausgebildeter Axialmähdrescher teuer in der Herstellung, da einmal die Antriebe und die Bewegungsmechanismen für die Reinigungseinrichtungen doppelt vorhanden sein müssen und zum anderen die Fördereinrichtungen zur Beschickung der Reinigungseinrichtungen kostenintensiv in der Herstellung sind.

Ein weiterer leistungsgesteigerter Mähdrescher ist in der WO 97/01951 beschrieben, dessen dem Förderschacht nachgeordnete Verarbeitungseinheit mit einem Tangentialdreschwerk, Schüttlern, einem Rücklaufboden, zwei Vorbereitungsflächen und einer Reinigungseinrichtung mit unterschiedlichen Kanalbreiten ausgerüstet ist. Deren Schüttler und der darunter angeordnete Rücklaufboden sind so breit ausgebildet, daß sie etwa die zulässige Breite des Mähdreschers gemäß Straßenverkehrszulassungsordnung erreichen. Die gleiche Breite weist ihre Reinigungseinrichtung auf. Zwischen der mit der Breite des Förderschachtes übereinstimmenden schmalen Drescheinrichtung und den vorstehend erwähnten breit ausgebildeten Baugruppen befindet sich eine rotierende Übergabeeinrichtung, die das hier hauptsächlich aus Stroh und Restkörnern bestehende Dreschgut auf die Breite der Schüttler auseinanderziehen soll. Unter der Drescheinrichtung sind erste und zweite Vorbereitungsflächen mit einer der Drescheinrichtung entsprechenden Breite angeordnet, die das Obersieb der Reinigungseinrichtung hauptsächlich in dessen mittlerem Bereich mit Dreschgut belegen sollen. Der Rücklaufboden ist dagegen auf seiner Oberseite in seinem in Fahrtrichtung gesehenen vorderen Bereich mit Führungseinrichtungen besetzt, die das Dreschgut verstärkt auf die äußeren Bereiche des Obersiebes verteilen sollen.

Die Nachteile dieses Mähdreschertyps sind, daß das Dreschgut an den Stellen der sich verbreiternden Kanalbreite zwischen Drescheinrichtung und Schüttlern sowie den Vorbereitungsflächen und der Reinigungseinrichtung auch hier nicht gleichbleibend gleichmäßig verteilt wird, so daß die Schüttler und auch die Reinigungseinrichtung ihre theoretisch vorhandene Leistungsfähigkeit praktisch nicht ausschöpfen können. Hinzu kommt, daß die Drescheinrichtung zu schmal und damit nicht leistungsfähig genug für die nachgeordneten breiteren Funktionsbaugruppen der Verarbeitungseinheit ist, da sie sich im Bereich zwischen den Vorderrädern des Mähdreschers befindet, wo einfach nicht genügend Platz für eine ausreichende Breite zur Verfügung steht. Diese kritische Situation verschärft sich noch dadurch, daß innerhalb dieses sehr eingeschränkten Bauraumes auch noch die Antriebe für die Drescheinrichtung Platz finden müssen.

Weiterhin wäre noch auf einen dritten Mähdrescher nach der DE 196 53 399 A1 hinzuweisen, der mit dem vorstehend beschriebenen Mähdrescher weitestgehend übereinstimmt. Seine Verarbeitungseinheit weist ebenfalls ein mit der Breite des Förderschachtes übereinstimmendes und deshalb relativ schmal ausgebildetes Tangentialdreschwerk auf, hinter dem anstelle der Schüttler nach der WO 97/01951 breite rotierende Nachtrenneinrichtungen angeordnet sind, unter denen sich ein breiter Rücklaufboden befindet. Zwischen der Drescheinrichtung und den Nachtrenneinrichtungen ist auch hier eine das Dreschgut in der Breite auseinanderziehende Übergabeeinrichtung vorgesehen. Die ebenfalls nur so breit wie die Drescheinrichtung ausgebildete und unter ihr angebrachte erste Vorbereitungsfläche übergibt das Dreschgut auf den mittleren Bereich einer zweiten breiten Vorbereitungsfläche, die verstärkt den mittleren Bereich des Obersiebes der Reinigungseinrichtung belegen soll. Die analog wie bei vorstehend beschriebenem Mähdrescher vorhandenen Führungseinrichtungen im vorderen Teil des Rücklaufbodens sollen das Dreschgut bevorzugt auf die äußeren Bereiche der zweiten Vorbereitungsfläche schaffen. Zusätzlich wird in den äußeren Bereichen der zweiten Vorbereitungsfläche noch die sogenannte Überkehr aus der Reinigungseinrichtung nach einem Nachdrusch abgelegt.

Da dieser Mähdreschertyp funktionell mit dem nach der WO 97/01951 vergleichbar ist, da sich auch hier innerhalb der Verarbeitungseinheit die Kanalbreite von der des schmalen Förderschachtes auf eine größere Breite verändert, gelten für ihn die gleichen Nachteile.

Näher betrachtet werden soll schließlich noch der Mähdrescher nach der US-A-4,606,356, der einen sehr schmalen Förderschacht der Breite "B" hat. Diesem nachgeordnet ist die Dreschtrommel mit ihrer Dreschkammer, deren Breite "L" deutlich größer als "B" ist. Das der Dreschtrommel in ihrem mittleren Bereich zugeführte Dreschgut wird im Zusammenwirken mit dem Dreschkorb zu ihrem in Flußrichtung gesehenen hinteren Ende geleitet, wo es auf eine geschlossene Führungsplatte trifft. Dadurch wird das Dreschgut in der Dreschkammer wieder nach vom und oben gelenkt, durch oben an der Decke der Dreschkammer befestigte Führungsbleche seitlich auseinander gezogen und danach einem zweiten Dreschvorgang unterzogen. Von den beiden hinteren Auslaßöffnungen der Dreschtrommel wird das weitestgehend ausgedroschene Dreschgut an zwei seitlich angeordnete Auswurftrommeln weitergeleitet, die es auf die nachgeordneten Schüttler werfen. Bedeutsam ist, daß die Breite "A" der Schüttler deutlich größer als die Breite "L" der Dreschkammer ist.

Ein derart aufgebauter Mähdrescher hat aus nachfolgend genannten Gründen gravierende Nachteile. Einmal wird das gesamte Dreschgut nur in einem schmalen Bereich in der Mitte der Dreschtrommel gedroschen, dann von dieser in zwei Teilströme getrennt und dabei seitlich auseinandergezogen und anschließend werden die Teilströme nur in den schmalen Seitenbereichen der Dreschtrommel erneut gedroschen. Die Dreschleistung dieser Dreschtrommel bleibt deshalb im Vergleich zu einer mit einer mit gleichmäßig mit Dreschgut beschickten Dreschtrommel gleicher Breite weit zurück. Ein weiterer Nachteil ist, daß die in der Breite eingeengten Teilströme, gemessen an der eigentlich zur Verfügung stehende Breite "L" der Dreschkammer, von den beiden Auswurftrommeln auf die Schüttler geworfen werden, deren Breite "A" noch breiter als "L" ist. Die logische Konsequenz davon ist, daß der mittlere Bereich der Schüttler zur Komtrennung nicht voll ausgenutzt wird, was sich im Teilstück unmittelbar nach den Auswurftrommeln besonders negativ auswirkt. Insgesamt führt das Teilen und seitliche Auseinanderziehen des Dreschgutes in der Dreschtrommel, das doppelte Dreschen, das Verdichten zu zwei Teilströmen und das anschließende Werfen der schmalen Teilströme auf die sehr breiten Schüttler nicht zu der angestrebten Steigerung der Dreschleistung. Schließlich ist an diesem Mähdrescher noch negativ zu vermerken, daß darüber hinaus die Auswurftrommeln auch einen Kosten erhöhenden Faktor darstellen.

Deshalb liegt der Erfindung die Aufgabe zugrunde, einen selbstfahrenden Mähdrescher hoher Leistungsfähigkeit zu schaffen, dessen das Dreschgut fördernde und bearbeitende Funktionsbaugruppen eine hohe und weitestgehend aufeinander abgestimmte gleichmäßige Leistungsfähigkeit aufweisen und die kostengünstig in der Herstellung sind.

Diese Aufgabe wird gemäß der Erfindung durch die Merkmale des Patentanspruchs 1 gelöst, wobei in den Unteransprüchen Merkmale aufgeführt sind, die diese Lösung in vorteilhafter Weise weiterentwickeln.

Durch die gegenüber dem Förderschacht des Mähdreschers größere und durchgängig gleich große Kanalbreite aller zur Verarbeitungseinheit gehörenden Funktionsbaugruppen steht einerseits eine maximal mögliche Bearbeitungsfläche zum Dreschen, Nachtrennen und zum Reinigen des Dreschgutes zur Verfügung. Andererseits gibt es dadurch auch keine Störungen beim Fördern und beim Bearbeiten des Dreschgutes zwischen den Funktionsbaugruppen bzw. innerhalb einer Funktionsbaugruppe mehr, da durch die gleiche Kanalbreite über die gesamte Länge der Verarbeitungseinheit die bisher notwendige Verbreiterung des Dreschgutes in dessen Flußrichtung durch die Verarbeitungseinheit nun erfindungsgemäß nicht mehr notwendig ist. Die gleiche Aussage wie für die Kanalbreite trifft natürlich auch für die Verteilbreite des Dreschgutes im Falle der Anwendung von einem oder mehreren Dreschund/oder Trennrotoren zu.

Durch die Anordnung einer Erntegut- Verbreiterungseinrichtung zwischen dem in Fahrtrichtung gesehenen hinteren Ende des Förderschachtes und vor der Drescheinrichtung der Verarbeitungseinheit ist eine Möglichkeit entstanden, die Unterschiede zwischen der Kanalbreite bzw. der Verteilbreite der Verarbeitungseinheit und dem schmaleren Förderschacht an dieser Stelle mit geeigneten Mitteln auszugleichen und gleichzeitig den Fördervorgang des Dreschgutes zwischen ihnen zu unterstützen. Dazu ist in der Erntegut- Verbreiterungseinrichtung ein Förderorgan vorgesehen, welches das Dreschgut einmal in Richtung der Drescheinrichtung und zum anderen zu seiner Verbreiterung quer dazu bewegt. Da die Erntegut- Verbreiterungseinrichtung durch den Ort ihrer Anbringung zwischen den Vorderrädern des Mähdreschers nur so breit wie der Förderschacht sein kann, gibt es an der Übergabestelle zwischen diesen beiden Baugruppen auch keine Förderprobleme.

Dabei hat es sich als zweckmäßig erwiesen, das Förderorgan in der Erntegut-Verbreiterungseinrichtung als eine rotierende Zuführtrommel auszubilden, die eine so hohe Umfangsgeschwindigkeit aufweist, daß sie das vom Förderschacht ankommende Dreschgut beschleunigt, wodurch dessen sichere Abnahme vom Förderschacht und staufreie Abgabe an die Drescheinrichtung gewährleistet ist. Darüber hinaus bietet es sich an, den für die Erntegut- Verbreiterungseinrichtung benötigten Bauraum gleich mit zur Unterbringung einer Steinabscheideeinrichtung zu nutzen, was insbesondere für eine Verarbeitungseinheit mit Axialdreschwerk von Vorteil ist.

In einer bevorzugten Ausführungsvariante der Erntegut- Verbreiterungseinrichtung ist diese auf die stabile Vorderachse des selbstfahrenden Mähdreschers aufgebaut und mit einem so stabilen Gehäuse ausgestattet, daß an ihrer Vorderseite der Förderschacht schwenkbeweglich und oben die Fahrerkabine in einer freitragenden Konstruktion befestigt werden können. Der Förderschacht gelangt dadurch in eine Position in Bezug auf die Fahrerkabine, daß er einmal durch seinen relativ weit vom liegenden Schwenkpunkt um die obere Schachtwelle sehr weit ausgehoben werden kann und zum anderen in der Arbeitsstellung eine optimale Sicht auf das Schneidwerk ermöglicht.

Die Erfindung ist bevorzugt in den sehr weit verbreiteten selbstfahrenden Axialmähdreschern anzuwenden, wo der Erntegut- Verbreiterungseinrichtung zwei gegenläufig rotierende Dresch- und Trennrotoren nachgeordnet sind. Hier kommt es darauf an, eine maßliche Übereinstimmung zwischen der Verteilbreite der Dresch- und Trennrotoren für das Dreschgut über deren gesamte Länge auf den Vorbereitungsboden und den Rücklaufboden sowie mit der ebenso breiten Kanalbreite aller übrigen Funktionsbaugruppen der Verarbeitungseinheit herzustellen. Das wird erreicht, wenn die rotierenden Dreschund Trennrotoren so angeordnet werden, daß sie das Dreschgut von ihren sich gegenüberstehenden Umfangsbereichen nahe der Längsmittelachse des Mähdreschers nach unten und außen verteilen, weil dadurch die gleichmäßigste Schichthöhe des Erntegutes auf dem Vorbereitungsboden und dem Rücklaufboden realisiert werden kann. In diesem Zusammenhang ist es empfehlenswert, die Erntegut- Verbreiterungseinrichtung mit einer das Dreschgut in zwei Teilströme aufteilenden Trenneinrichtung auszustatten, die eine gleichmäßigere Beschickung jedes einzelnen Dresch- und Trennrotors herbeiführt.

Die Erfindung kann aber auch in einer anderen zweckmäßigen Ausführungsvariante an einem selbstfahrenden Mähdrescher in Verbindung mit der Erntegut- Verbreiterungseinrichtung verwirklicht werden, der als Verarbeitungseinheit ein aus einer oder mehreren Dreschtrommeln bestehendes Tangentialdreschwerk besitzt, unter dem sich ein Vorbereitungsboden erstreckt, dem herkömmliche Schüttler nachgeordnet sind und in dessen unterem Bereich eine Reinigungseinrichtung angeordnet ist. Alle genannten Funktionsbaugruppen sind so breit ausgebildet, daß sie einschließlich ihrer zum Teil notwendigen Antriebselemente unmittelbar bis zu den Innenwänden der Seitenverkleidung des Mähdreschers reichen, die gemeinsam mit den Außenmaßen über die Vorderräder und die Hinterräder die Gesamtbreite des Mähdreschers bestimmen.

Bei dieser Ausführungsvariante mit dem Tangentialdreschwerk hat es sich bewährt, die Dreschtrommel mit gewendelten Schlagleisten zu bestücken, um auch bei einem extrem hohen Angebot an Dreschgut sicherzustellen, daß über die gesamte Breite der Dreschtrommel gesehen eine gleichmäßige Verteilung des Dreschgutes gewährleistet ist. Zum gleichen Zweck ist es vorteilhaft, die Zuführtrommel in der Erntegut- Verbreiterungseinrichtung zusätzlich mit wendelförmigen Mitnehmern zu bestücken, die das Dreschgut der Verarbeitungseinheit bereits in deren Kanalbreite zuführen. Es ist aber ebenso möglich, den die Zuführtrommel umgebenden Boden alternativ oder zusätzlich mit derartigen wendelförmigen Mitnehmern auszustatten.

Für beide vorgestellte Ausführungsvarianten ist es weiterhin zweckmäßig, die gesamte Verarbeitungseinheit oberhalb und außerhalb des Umfanges der Vorderräder und der Hinterräder anzubringen, um eine maximal mögliche Kanalbreite bzw. Verteilbreite realisieren zu können. Ihr Grundaufbau mit der auf der Vorderachse aufgebauten Erntegut- Verbreiterungseinrichtung, der daran befestigten Fahrerkabine und dem Förderschacht sowie der in das Fahrgestell des selbstfahrenden Mähdreschers integrierten Reinigungseinrichtung macht es außerdem möglich, allein die unterschiedlichen Dresch- und Nachtrenneinrichtungen gegeneinander auszutauschen, so daß ein Umbau von einem Axialmähdrescher in einen Tangentialmähdrescher und umgekehrt relativ problemlos möglich ist.

Zusammenfassend stellen sich die Vorteile der Erfindung damit so dar, daß durch die aufeinander abgestimmte Leistungsfähigkeit der Funktionsorgane, die dadurch alle gleichzeitig an der oberen Leistungsgrenze arbeiten können, die Leistungsfähigkeit des gesamten Mähdreschers entscheidend gestiegen ist. Diese Tatsache bedeutet aber auch, daß der Materialeinsatz für alle Funktionsbaugruppen optimal ist, was entscheidend für eine kostengünstige Herstellung ist. Ein weiterer Kosten senkender Faktor ist das hohe Maß der Vereinheitlichung zwischen einem Axial- bzw. einem Tangentialmähdrescher , weil sich dadurch automatisch höhere Stückzahlen für viele Einzelteile ergeben.

Die Erfindung soll nun anhand von zwei Ausführungsbeispielen näher erläutert werden, wobei die einzelnen Figuren zeigen:
- Fig. 1:: eine schematische Seitenansicht auf einen selbstfahrenden Mähdrescher mit einer aus drei Trommeln bestehenden Drescheinrichtung und Schüttlern als Nachtrenneinrichtung
- Fig. 2:: eine Draufsicht nach Fig. 1
- Fig. 3:: einen vergrößerten Ausschnitt von der Emtegut- Verbreiterungseinrichtung aus Fig. 2
- Fig. 4:: eine schematische Seitenansicht auf einen selbstfahrenden Mähdrescher mit zwei Dresch- und Trennrotoren
- Fig. 5:: eine Draufsicht nach Fig. 5
- Fig. 6:: einen vergrößerten Ausschnitt von der Emtegut- Verbreiterungseinrichtung aus Fig. 4
- Fig. 7:: eine Ansicht "A" nach Fig. 6
- Fig. 8:: eine Ansicht "B" nach Fig. 5

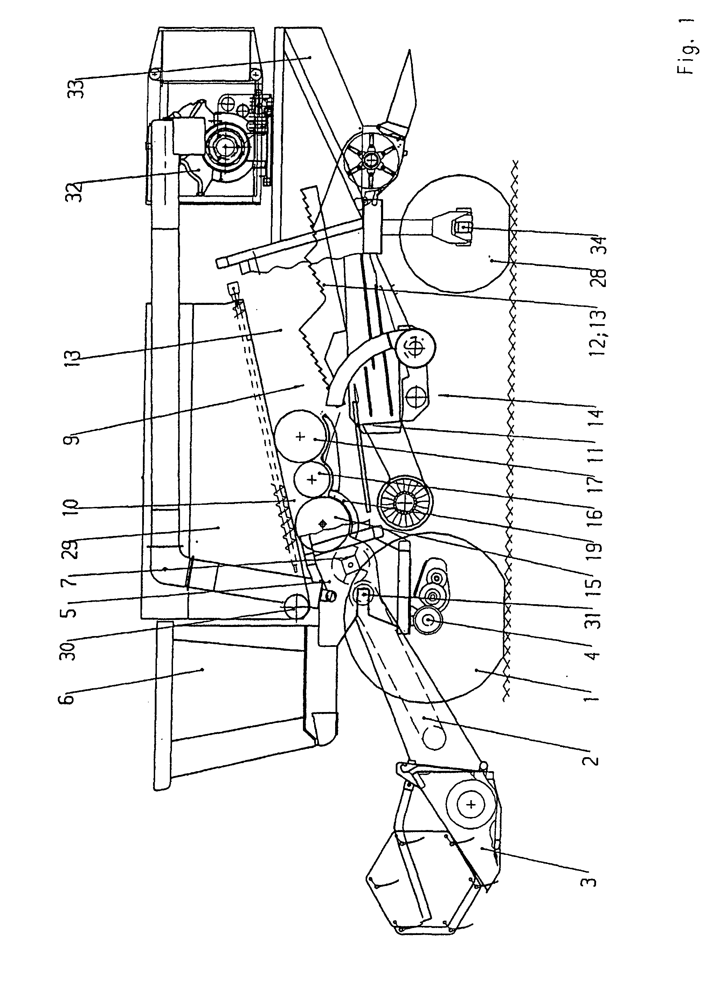

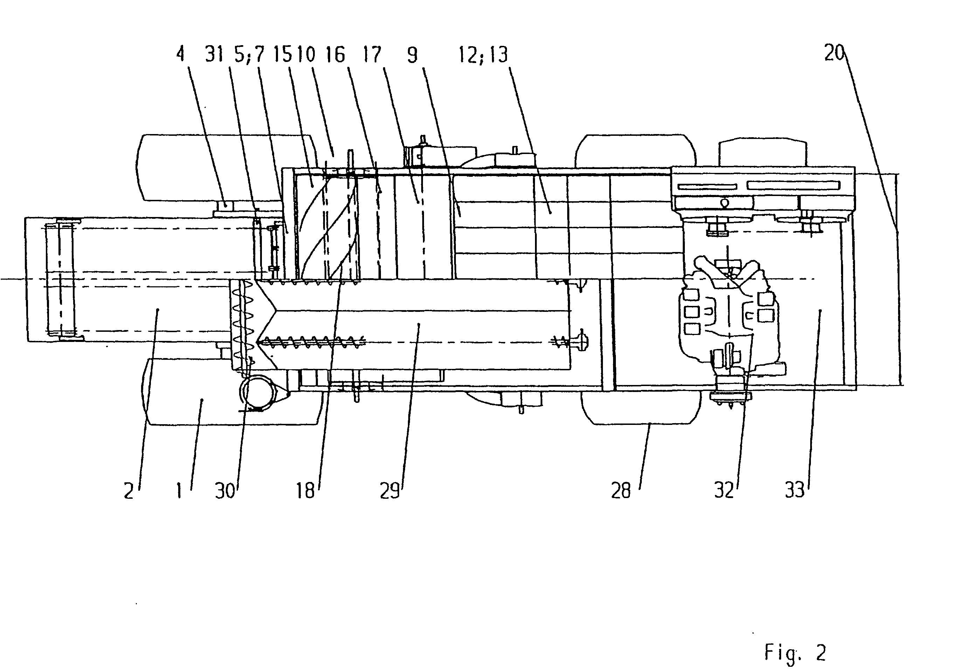

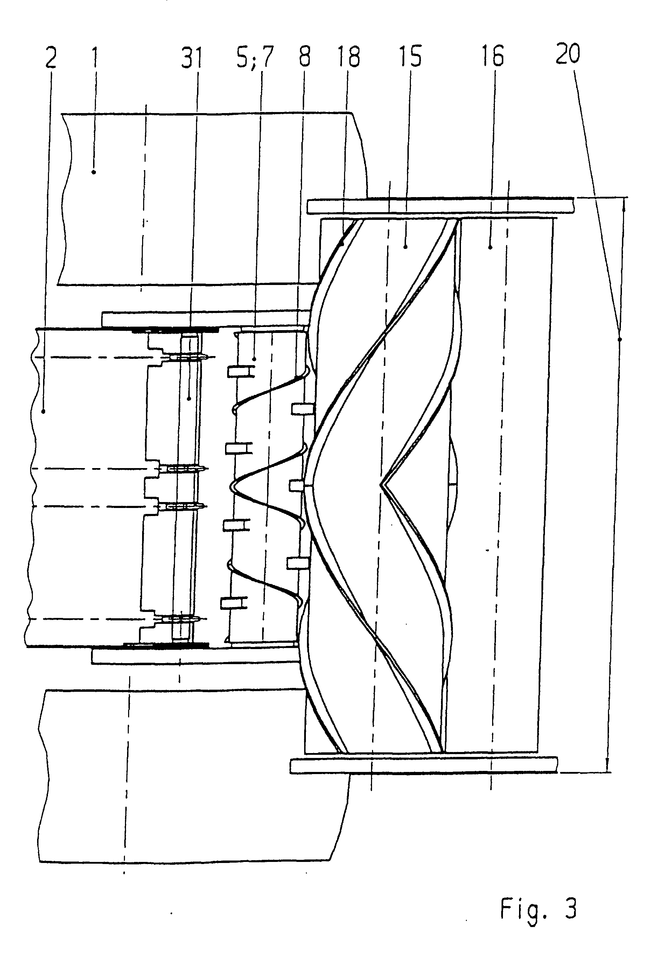

Der in den Figuren 1 bis 3 gezeigte selbstfahrende Mähdrescher nach dem ersten Ausführungsbeispiel weist zwischen den Vorderrädern 1 einen Förderschacht 2 auf, an dessen vorderem Ende ein Schneidwerk 3 angehängt ist und der sich von da aus aufsteigend über die als Triebachse ausgebildete Vorderachse 4 bis zu einer Erntegut- Verbreiterungseinrichtung 5 erstreckt, an der er schwenkbeweglich befestigt ist. Da die Erntegut- Verbreiterungseinrichtung 5 auf die Vorderachse 4 aufgeschraubt ist und sie sich demzufolge zumindest teilweise innerhalb der lichten Weite der Vorderräder 1 befindet, ist sie nur genau so schmal wie der Förderschacht 2 ausgebildet. Ihr Gehäuse ist so stabil ausgeführt, daß an ihm die Fahrerkabine 6 freitragend angebracht werden konnte. In der Erntegut- Verbreiterungseinrichtung 5 ist eine quer zur Fahrtrichtung des selbstfahrenden Mähdreschers und horizontal ausgerichtete Zuführtrommel 7 als Förderorgan untergebracht, die mit wendelförmigen Mitnehmern 8 besetzt ist. An die Erntegut- Verbreiterungseinrichtung 5 schließt sich eine Verarbeitungseinheit 9 an, zu der in diesem Ausführungsbeispiel eine als Tangentialdreschwerk ausgebildete Drescheinrichtung 10, ein Vorbereitungsboden 11, eine aus Schüttlem 12 bestehende Nachtrenneinrichtung 13 und eine Reinigungseinrichtung 14 gehören. Die Drescheinrichtung 10 besteht aus einer Dreschtrommel 15, einer Leittrommel 16 und einer Separiertrommel 17, wobei die Dreschtrommel 15 mit gewendelten Schlagleisten 18 besetzt ist, die mit einem Standard- Dreschkorb 19 zusammenwirken. Alle genannten Funktionsbaugruppen der Verarbeitungseinheit 9 weisen eine größere Breite als der Förderschacht 2 auf und sie besitzen auch alle die gleiche Kanalbreite 20.

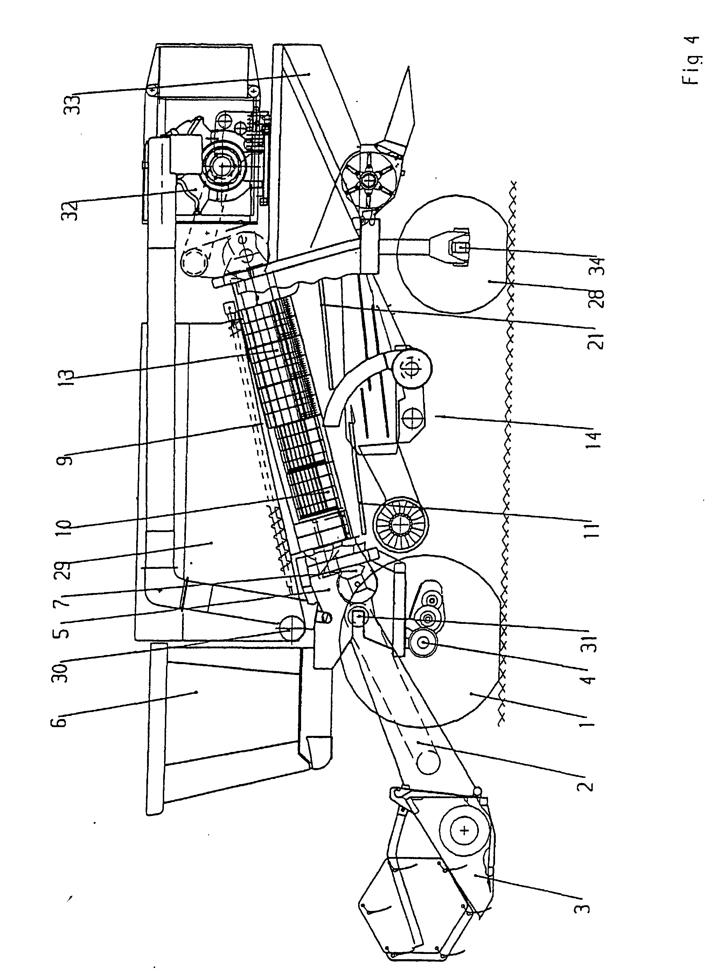

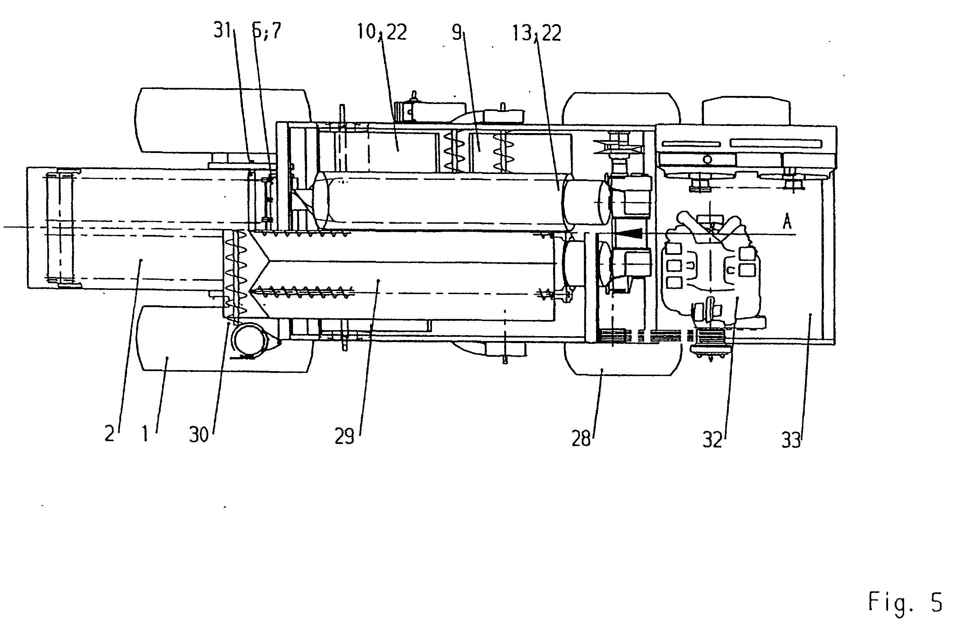

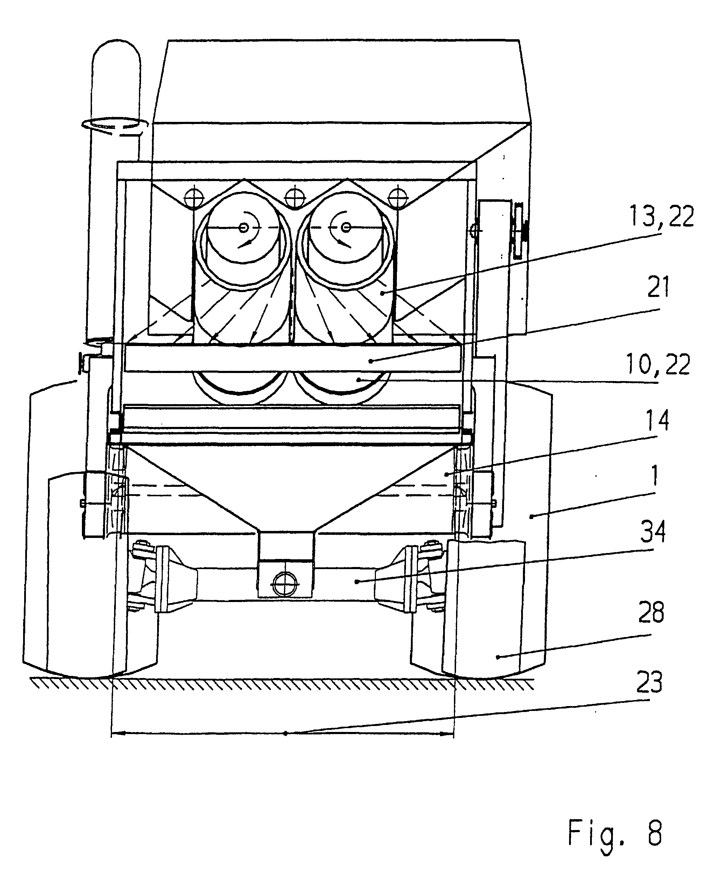

In den Figuren 4 bis 8 ist ein zweites Ausführungsbeispiel eines selbstfahrenden Mähdreschers gezeigt, dessen Verarbeitungseinheit 9 auch hier einen Vorbereitungsboden 11, einen Rücklaufboden 21 sowie eine Reinigungseinrichtung 14 besitzt, die alle breiter als der Förderschacht 2 ausgebildet sind und eine gleiche Kanalbreite 20 aufweisen. Als Drescheinrichtung 10 und als Nachtrenneinrichtung 13 finden in dieser Verarbeitungseinheit 9 zwei gegenläufig rotierende und sich in Längsrichtung des Mähdreschers erstreckende Dresch- und Trennrotoren 22 Anwendung, deren Verteilbreite 23 für das Erntegut auf die vorstehenden Funktionsbaugruppen der Verarbeitungseinheit 9 maßlich deren Kanalbreite 20 entspricht.

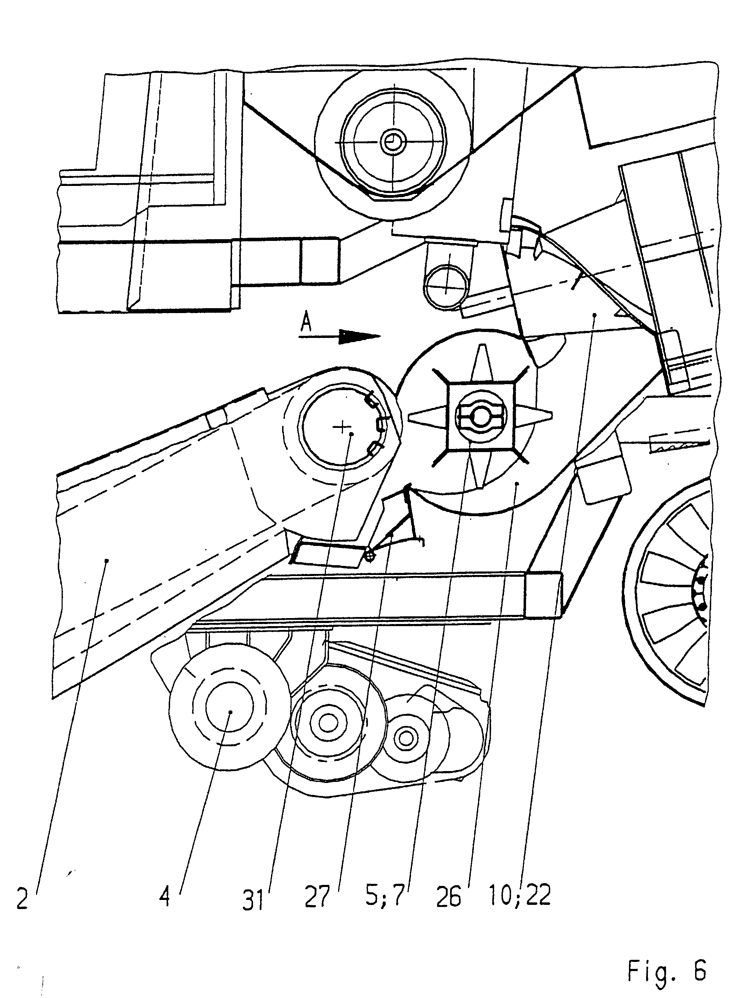

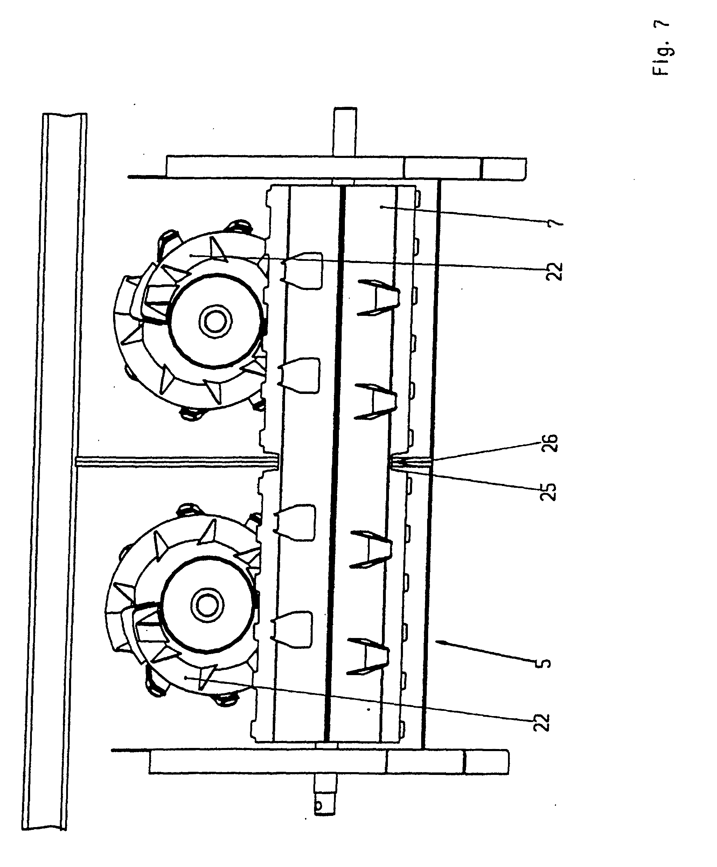

Ein in den Figuren 6 und 7 gezeigter Unterschied zur Erntegut- Verbreiterungseinrichtung 5 aus vorstehendem Ausführungsbeispiel besteht darin, daß diese mit einer das Dreschgut in zwei Teilströme aufteilenden Trenneinrichtung 24 ausgestattet ist. Dazu ist in der Mitte der Zuführtrommel 7 eine Nut 25 vorgesehen, in die ein am Boden der Erntegut- Verbreiterungseinrichtung 5 befestigtes Schneidmesser 26 hineinragt. Im vorderen unteren Teil der Erntegut- Verbreiterungseinrichtung 5 ist eine Steinabscheideeinrichtung 27 untergebracht, die aber auch in der Erntegut- Verbreiterungseinrichtung 5 des ersten Ausführungsbeispiels vorhanden ist.

Die Gemeinsamkeiten beider Ausführungsbeispiele bestehen darin, daß deren Verarbeitungseinheiten 9 oberhalb und außerhalb des Umfanges der Vorderräder 1 und auch der Hinterräder 28 angeordnet sind, wobei sie diese durch ihre große Breite zumindest teilweise überragen. Auch der Korntank 29 ist in beiden Ausführungsbeispielen über der Verarbeitungseinheit 9 angebracht, der mit seinem vorderen Ende bis zur Erntegut- Verbreiterungseinrichtung 5 reicht. Seine Entleerungsschnecke 30 befindet sich in einem Bereich oberhalb der oberen Schachtwelle 31 des Förderschachtes 2.

Der Antriebsmotor 32 ist am hinteren oberen Ende des Mähdreschers oberhalb des Strohauslaufs 33 und hinter seiner Hinterachse 34 angeordnet. Die von ihm bereitgestellte Antriebsleistung wird für die Zuführtrommel 7 in der Emtegut- Verbreiterungseinrichtung 5, die obere Schachtwelle 31 des Förderschachtes 2, die als Triebräder ausgebildeten Vorderräder 1 und die Entleerungsschnecke 30 des Korntanks 29 mit hydraulischen Antriebsmitteln übertragen und auf die Funktionsorgane der Verarbeitungseinheit 9 mechanisch.

## Patentansprüche

1. Selbstfahrender Mähdrescher zur Ernte landwirtschaftlicher Erntegüter, mit einem zwischen den Vorderrädern (1) angeordneten Förderschacht (2), einer darüber angeordneten Fahrerkabine (6) und einer in Fahrtrichtung gesehen sich hinter dem Förderschacht (2) befindenden Verarbeitungseinheit (9), die zumindest aus einer Drescheinrichtung (10), einer Nachtrenneinrichtung (13) und einer Reinigungseinrichtung (14) besteht, **dadurch gekennzeichnet, daß**
a) alle zur Verarbeitungseinheit (9) gehörenden Funktionsbaugruppen breiter als der Förderschacht (2) ausgebildet sind und eine gleiche Kanalbreite (20) bzw. eine gleiche Verteilbreite (23) besitzen,
b) zwischen dem in Fahrtrichtung gesehenen hinteren Ende des Förderschachtes (2) und vor der Drescheinrichtung (10) eine Erntegut- Verbreiterungseinrichtung (5) angeordnet ist, die sich zumindest teilweise zwischen den Vorderrädern (1) befindet und annähernd bzw. ebenso breit wie der Förderschacht (2) ist,
c) in der Erntegut- Verbreiterungseinrichtung (5) ein das Dreschgut in Richtung der Drescheinrichtung (10) und zusätzlich quer dazu bewegendes Förderorgan vorgesehen ist.

2. Selbstfahrender Mähdrescher nach Anspruch 1, **dadurch gekennzeichnet, daß** das Förderorgan in der Erntegut- Verbreiterungseinrichtung (5) als Zuführtrommel (7) ausgebildet ist.

3. Selbstfahrender Mähdrescher nach den Ansprüchen 1 und 2, **dadurch gekennzeichnet, daß** die Umfangsgeschwindigkeit der Zuführtrommel (7) höher als die Fördergeschwindigkeit des Dreschgutes im Förderschacht (2) ist.

4. Selbstfahrender Mähdrescher nach den Ansprüchen 1 bis 3, **dadurch gekennzeichnet, daß** die Erntegut- Verbreiterungseinrichtung (5) eine Steinabscheideeinrichtung (27) aufweist.

5. Selbstfahrender Mähdrescher nach den Ansprüchen 1 bis 4, **dadurch gekennzeichnet, daß** die Erntegut- Verbreiterungseinrichtung (5) auf der Vorderachse (4) aufgebaut ist, an der vom der Förderschacht (2) schwenkbeweglich und darüber die Fahrerkabine (6) freitragend befestigt sind.

6. Selbstfahrender Mähdrescher nach den Ansprüchen 1 bis 5, **dadurch gekennzeichnet, daß** der Emtegut- Verbreiterungseinrichtung (5) ein Axialdreschwerk, bestehend aus zwei gegenläufig rotierenden Dresch- und Trennrotoren (22), nachgeordnet ist.

7. Selbstfahrender Mähdrescher nach den Ansprüchen 1 bis 6, **dadurch gekennzeichnet, daß** die Emtegut- Verbreiterungseinrichtung (5) mit einer das Dreschgut in zwei Teilströme aufteilenden Trenneinrichtung (24) ausgestattet ist.

8. Selbstfahrender Mähdrescher nach den Ansprüchen 1 bis 7, **dadurch gekennzeichnet, daß** der Erntegut- Verbreiterungseinrichtung (5) eine als Tangentialdreschwerk ausgebildete Drescheinrichtung (10) nachgeordnet, ist.

9. Selbstfahrender Mähdrescher nach den Ansprüchen 1 bis 8, **dadurch gekennzeichnet, daß** die Zuführtrommel (7) im Zusammenwirken mit einer als Tangentialdreschwerk ausgebildeten Drescheinrichtung (10) mit wendelförmigen Mitnehmern (8) besetzt ist.

## Claims

1. Self-propelled combine harvester for harvesting agricultural crops, with a conveyor shaft (2) arranged between the front wheels (1), a driver's cab (6) arranged above it and a processing unit (9) located behind (viewed in the direction of travel) the conveyor shaft (2), which consists of at least a threshing unit (10), a post-separating unit (13) and a cleaning unit (14), **characterised in that**
a) all the functional modules belonging to the processing unit (9) are formed wider than the conveyor shaft (2) and possess an equal channel width (20) and an equal distribution width (23),
b) between the rear end (viewed in the direction of travel) of the conveyor shaft (2) and in front of the threshing unit (10) a crop dispersal unit (5) is arranged, which is located at least partly between the front wheels (1) and is approximately as wide as the conveyor shaft (2),
c) in the crop dispersal unit (5) a conveyor element moving the material to be threshed in the direction of the threshing unit (10) and additionally transversely to it is provided.

2. Self-propelled combine harvester in accordance with claim 1, **characterised in that**, the conveyor element in the crop dispersal unit (5) is formed as a feeder drum (7).

3. Self-propelled combine harvester in accordance with claims 1 and 2, **characterised in that**, the peripheral speed of the feeder drum (7) is higher than the conveying speed of the threshed material in the conveyor shaft (2).

4. Self-propelled combine harvester in accordance with claims 1 to 3, **characterised in that**, the crop dispersal unit (5) possesses a stone-separating device (27).

5. Self-propelled combine harvester in accordance with claims 1 to 4, **characterised in that**, the crop dispersal unit (5) is built onto the front axle (4), to which it is attached cantilevered in front of the conveyor shaft (2) so that it can tilt and above the driver's cab (6).

6. Self-propelled combine harvester in accordance with claims 1 to 5, **characterised in that**, behind the crop dispersal unit (5) an axial threshing unit, consisting of two contra rotating threshing and separating rotors (22), is arranged.

7. Self-propelled combine harvester in accordance with claims 1 to 6, **characterised in that**, the crop dispersal unit (5) is equipped with a separating unit (24) for dividing the material to be threshed into two part streams.

8. Self-propelled combine harvester in accordance with claims 1 to 7, **characterised in that**, after the crop dispersal unit (5) a threshing unit (10) formed as a tangential thresher is arranged.

9. Self-propelled combine harvester in accordance with claims 1 to 8, **characterised in that**, the feeder drum (7) in combination with a threshing unit (10) formed as a tangential thresher is fitted with helical pushers (8).

## Revendications

1. Moissonneuse-batteuse automotrice pour la récolte de produits agricoles, avec une colonne de transport (2) disposée entre les roues avant (1), une cabine de conduite (6) disposée au-dessus et, vue dans le sens de la marche, une unité de traitement (9) disposée derrière la colonne de transport (2) qui comporte au moins un dispositif de battage (10), un dispositif de séparation finale (13) et un dispositif de nettoyage (14), **caractérisée en ce que**
a) tous les groupes fonctionnels faisant partie de l'unité de traitement (9) sont plus larges que la colonne de transport (2) et possèdent une largeur de tunnel (20) identique ou une largeur de répartition (23) identique,
b) entre l'extrémité arrière, vue dans le sens de la marche, de la colonne de transport (2) et avant le dispositif de battage (10), un dispositif d'éparpillement du produit de récolte (5) est disposé qui se trouve au moins partiellement entre les roues avant (1)et présente une largeur à peu près égale à celle de la colonne de transport (2),
c) dans le dispositif d'éparpillement du produit de récolte (5) un organe déplaçant le produit de battage en direction du dispositif de battage (10) et, se déplaçant en outre transversalement par rapport à celui-ci, est prévu.

2. Moissonneuse-batteuse automotrice selon la revendication 1, **caractérisée en ce que** l'organe de transport dans le dispositif d'éparpillement du produit de récolte (5), a la forme d'un tambour d'amenée (7).

3. Moissonneuse-batteuse automotrice selon les revendications 1 et 2, **caractérisée en ce que** la vitesse périphérique du tambour d'amenée (7) est supérieure à la vitesse de transport du produit de battage dans la colonne de transport (2).

4. Moissonneuse-batteuse automotrice selon les revendications 1 à 3, **caractérisée en ce que** le dispositif d'éparpillement du produit de récolte (5) présente un dispositif épierreur (27).

5. Moissonneuse-batteuse automotrice selon les revendications 1 à 4, **caractérisée en ce que** le dispositif d'éparpillement du produit de récolte (5) est monté sur l'essieu avant (4) à l'avant duquel la colonne de transport (2) est fixée de manière à pivoter, la cabine de conduite (6) étant fixée en porte-à-faux dessus.

6. Moissonneuse-batteuse automotrice selon les revendications 1 à 5, **caractérisée en ce qu'**un batteur axial, constitué de deux rotors de battage et de séparation tournant en sens contraire (22), est disposé derrière le dispositif d'éparpillement du produit de récolte (5).

7. Moissonneuse-batteuse automotrice selon les revendications 1 à 6, **caractérisée en ce que** le dispositif d'éparpillement du produit de récolte (5) est équipé d'un dispositif de séparation (24) séparant le produit de battage en deux flux partiels.

8. Moissonneuse-batteuse automotrice selon les revendications 1 à 7, **caractérisée en ce qu'**un dispositif de battage ayant la forme d'un organe de battage tangentiel (10) est disposé derrière le dispositif d'éparpillement du produit de récolte (5).

9. Moissonneuse-batteuse automotrice selon les revendications 1 à 8, **caractérisée en ce que** le tambour d'amenée (7) est équipé d'entraîneurs (8) hélicoïdaux en coopération avec un dispositif de battage (10) ayant la forme d'un organe de battage tangentiel.
